Europäisches Patentamt

European Patent Office

Office européen des brevets

(19)

(11) EP 0 763 803 B1

## (12) FASCICULE DE BREVET EUROPEEN

(45) Date de publication et mention
de la délivrance du brevet:
**15.12.1999 Bulletin 1999/50**

(51) Int Cl.6: **G07C 13/00**, G06F 17/60

(21) Numéro de dépôt: **96401956.6**

(22) Date de dépôt: **13.09.1996**

(54) **Système de comptabilisation anonyme d'informations à des fins statistiques, notamment pour des opérations de vote électronique ou de relevés périodiques de consommation**

Anonymes Informationsverwaltungssystem für Statistiken, insbesondere für elektronische Wahlverfahren oder periodische Verbrauchsstücklisten

Anonymous information counting system for statistics, particularly for electronic voting operations or periodical consumption inventory

(84) Etats contractants désignés:
**DE FR GB IT**

(30) Priorité: **15.09.1995 FR 9510841**

(43) Date de publication de la demande:
**19.03.1997 Bulletin 1997/12**

(73) Titulaire: **THOMSON multimedia**
**92648 Boulogne Cédex (FR)**

(72) Inventeur: **Fischer, Jean-Bernard**
**92050 Paris la defense Cedex (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
**WO-A-92/03805          US-A- 5 218 528**

- **ELECTRONICS LETTERS, vol. 27, no. 11, 23 Mai 1991, STEVENAGE GB, pages 955-957, XP000232446 SLESSENGER: "socially secure cryptographic election scheme"**
- **COMPUTERS & SECURITY INTERNATIONAL JOURNAL DEVOTED TO THE STUDY OF TECHNICAL AND FINANCIAL ASPECTS OF COMPUTER SECURITY., vol. 10, no. 6, 1991, AMSTERDAM NL, pages 553-559, XP000264766 NURMI: "secret ballot elections in computer networks"**
- **ELECTRONICS & COMMUNICATIONS IN JAPAN, PART I - COMMUNICATIONS, vol. 68, no. 12, 1985, SILVER SPRING, MARYLAND, USA, pages 7-16, XP000570808 AKIYAMA: "secret ballot systems using cryptography"**

## Description

L'invention concerne un système de comptabilisation anonyme d'informations à des fins statistiques, permettant de préserver de manière sûre l'anonymat des informations traitées à l'égard des personnes non autorisées.

Une première application d'un tel système, comme on le verra plus loin, concerne la comptabilisation statistique, tout particulièrement les systèmes de "vote électronique" à distance.

Dans ces systèmes, il est souvent souhaitable et même indispensable de préserver le caractère anonyme du vote (principe du vote "à bulletin secret"), tout en pouvant vérifier l'identité d'un votant de manière à empêcher toute falsification d'identité ou votes multiples. D'autre part, il est nécessaire d'indiquer au votant que son vote a été effectivement pris en compte, cet aspect étant particulièrement important dans le cas d'un vote à distance car des difficultés de transmission ou de traitement peuvent intervenir sans que le votant ne puisse par lui même les détecter.

Une autre application possible concerne les systèmes de relevés de consommation à distance au moyen d'un système de scrutation installé chez l'utilisateur.

Il est indispensable dans ce cas de préserver une certaine confidentialité afin d'éviter que les informations relatives à l'utilisateur, qui est nécessairement identifié (à des fins de vérification) lors de la transmission de l'information, ne puissent être détournées pour obtenir des informations sur les habitudes, la vie privée, etc de la personne à l'origine de l'information.

Le document WO-A-92/03805 divulgue un système de vote électronique sécurisé à distance qui comporte une pluralité d'organes de décision ou ordinateurs de votants et au moins un ordinateur de vote physiquement protégé, ces organes étant fonctionnellement et structurellement distincts. Chaque ordinateur de votant comporte des moyens pour produire une information source (information de vote) à comptabiliser et une information d'identité individualisant l'ordinateur de votant ainsi que des moyens pour chiffrer l'information source. L'ordinateur de vote est agencé pour à réception d'un message crypté contenant une information source d'un ordinateur de votant décrypter le message reçu et recrypter l'information source en utilisant une donnée aléatoire produite par l'ordinateur de vote et une clé maître en possession du seul ordinateur de vote afin de stocker cette information source sous forme cryptée dans un fichier de vote VF qui peut être physiquement distinct de l'ordinateur de vote. L'ordinateur de vote est aussi agencé pour établir à partir des informations source stockées dans le fichier VF le résultat du vote.

L'idée de base de la présente invention consiste à séparer entre deux organes fonctionnellement et structurellement distincts les fonctions de vérification de l'identité et de l'authenticité de la source d'informations, d'une part, des fonctions d'utilisation de ces informations, d'autre part, avec échange de données sécurisé entre les divers organes intervenant dans la transaction (notamment par chiffrement, accusés de réception, signature électronique et moyens semblables, en eux-mêmes connus).

De cette manière, l'organe utilisateur (qu'on appellera par la suite "organe de comptabilisation") traitera des informations anonymes, mais dont il sera certain de l'authenticité et de la conformité.

En revanche, l'autre organe (que l'on appellera par la suite "organe de vérification") assurera le contrôle des informations reçues du votant ou du consommateur (qui sera appelé "organe de décision" par la suite), de façon nominative mais sans connaître le contenu de l'information source ni opérer de comptabilisation ni de cumul.

Bien entendu, pour éviter tout piratage des données au niveau des liaisons entre organes de décision, de vérification et de comptabilisation, les transmissions pourront avantageusement être chiffrées, notamment par des techniques connues telles que la cryptographie à clé publique, qui peuvent être aujourd'hui mises en oeuvre avec des moyens simples tels que des microprocesseurs intégrés à des cartes à puce.

Plus précisément, le système selon l'invention comporte une pluralité d'organes de décision, au moins un organe de vérification et au moins un organe de comptabilisation, ces organes étant fonctionnellement et structurellement distincts,

chaque organe de décision comportant :

- des moyens pour produire une information source à comptabiliser et une information d'identité individualisant l'organe de décision, et
- des moyens pour chiffrer l'information source de manière à la rendre indéchiffrable par l'organe de vérification et déchiffrable par l'organe de comptabilisation,

l'organe de vérification comportant :

- un fichier des identités des organes de décision,
- des moyens pour contrôler, à réception d'un message incident, l'identité de l'organe de décision à l'origine de ce message incident, et
- des moyens pour élaborer un message dérivé à partir de ce message incident, ce message dérivé étant un message anonyme dépourvu d'information d'identité déchiffrable par l'organe de comptabilisation,

l'organe de comptabilisation comportant :

- des moyens pour recevoir de l'organe de vérification les messages dérivés et pour traiter ces messages de manière à élaborer une statistique des informations source correspondantes, et
- un fichier des statistiques ainsi élaborées.

Selon un certain nombre de caractéristiques subsidiaires avantageuses de la présente invention :

- les moyens pour chiffrer l'information source de l'organe de décision sont des moyens de chiffrement à clé publique opérant à partir de la clé publique de l'organe de comptabilisation ;
- l'organe de vérification comporte en outre des moyens pour émettre en retour vers l'organe de décision un message d'accusé de réception après contrôle conforme de l'identité de cet organe de décision
- dans ce dernier cas, l'organe de vérification comporte avantageusement, en outre, des moyens pour chiffrer le message d'accusé de réception, ces moyens étant des moyens de chiffrement à clé publique opérant à partir de la clé publique de l'organe de décision, cette clé étant mémorisée dans le fichier des identités des organes de décision ;
- l'organe de comptabilisation comporte en outre des moyens pour émettre en retour vers l'organe de vérification un message d'accusé de réception après réception et traitement du message dérivé correspondant ;
- les messages échangés entre les organes de décision, l'organe de vérification et l'organe de comptabilisation comportent, pour au moins certains d'entre eux, une signature numérique et l'organe recevant un tel message comportant des moyens de vérification de la signature correspondante;
- l'organe de décision comporte en outre des moyens pour chiffrer l'information d'identité, ces moyens étant des moyens de chiffrement à clé ; publique opérant à partir de la clé publique de l'organe de vérification
- l'organe de décision est un terminal télématique coopérant avec une carte à microcircuit propre à un utilisateur donné et insérable dans un lecteur de ce terminal ;
- l'organe de vérification est un dispositif informatique et l'organe de comptabilisation est une carte à microcircuit insérable dans un lecteur de ce dispositif informatique.

D'autres caractéristiques et avantages de l'invention apparaîtront à la lecture de la description détaillée ci-dessous de deux exemples de mise en oeuvre de l'invention, ces exemples n'ayant bien entendu qu'un caractère illustratif et non limitatif.
La figure 1 illustre de façon schématique une première forme de mise en oeuvre de l'invention, appliquée à un système de vote électronique sécurisé à distance.
La figure 2 illustre de façon schématique une seconde forme de mise en oeuvre de l'invention, appliquée à un système de relevé de consommations statistique sécurisé à distance.
Première forme de mise en oeuvre de l'invention : système de vote électronique sécurisé à distance.

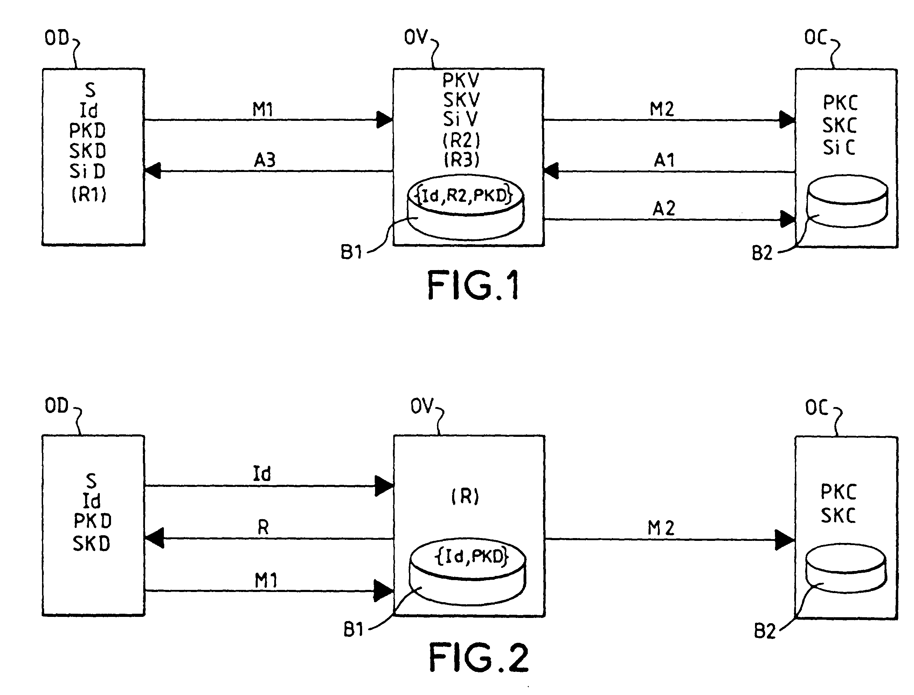

Sur la figure 1, on a schématisé en OD l'organe de décision, constitué d'un système électronique tel qu'un terminal télématique (par exemple un terminal vidéotex, un micro-ordinateur ou un terminal dédié), de préférence associé à une carte à puce propre à l'utilisateur et constituant une "carte d'électeur" électronique propre à mémoriser avec le degré de sécurité voulu les informations nécessaires à la transaction qui sera expliquée plus bas.
La référence OV désigne l'organe de vérification, qui peut notamment être constitué par un centre informatique distant relié par une liaison télématique à l'organe de décision OD.
En variante, notamment dans le cas d'un nombre réduit d'informations à comptabiliser (faible nombre de votants), l'organe de vérification OV peut être constitué d'une carte à puce à microprocesseur insérée dans un lecteur approprié, dès lors que la capacité mémoire de la puce est suffisante.
L'organe de comptabilisation OC, qui cumulera et mémorisera les données statistiques (c'est-à-dire les résultats du vote dans le cas particulier d'un système de vote électronique) est un organe de traitement fonctionnellement et structurellement distinct de l'organe de vérification OV.
Cet organe de comptabilisation OC peut être un centre informatique relié au centre informatique de l'organe de vérification OV mais, avantageusement, il peut s'agir également d'une simple carte à puce à microprocesseur, insérée dans un lecteur de l'organe de vérification OV pendant la durée d'enregistrement des votes.
Une fois l'opération de comptabilisation achevée (après clôture du scrutin dans le cas d'un vote), par lecture de la mémoire de l'organe de comptabilisation OC (par exemple la carte à puce correspondante) on pourra prendre directement connaissance du résultat final, en étant certain de son authenticité mais sans qu'il soit possible de connaître l'identité des votants, qui n'est pas parvenue jusqu'à cet organe de comptabilisation ; en outre, cette manière de procéder empêche toute observation dynamique de l'évolution des résultats.
Dans le cas, préférentiel, où l'on utilise des cartes à puce pour l'organe de décision OD, l'organe de comptage OC, et, éventuellement, l'organe de vérification OV, du fait du caractère portatif de ces cartes à puce, le système peut être physiquement réalisé sous forme, d'une part, d'un premier appareil servant à recueillir les votes et coopérant avec les deux (ou trois) cartes à puce et, d'autre part, d'un autre appareil permettant de présenter les résultats, distinct du précédent, donc sans possibilité de piratage ou de falsification.

On va maintenant décrire la manière dont est opérée la transaction, en prenant l'exemple d'une information source S élaborée au niveau de l'organe de décision OD et constituée d'un vote émis par un votant dont l'identité est Id.

On supposera que les organes de décision OD, de vérification OV et de comptabilisation OC disposent chacun d'une clé publique de chiffrement, respectivement PKD, PKV et PKC connue des autres organes du système, ainsi que d'une clé secrète de déchiffrement, respectivement SKD, SKV et SKC, connue du seul organe correspondant, et homologue des clés publiques PKD, PKV et PKC respectives.

Ces trois organes disposent également de signatures numériques respectives SiD, SiV et SiC permettant de mettre en oeuvre un mécanisme de signature numérique avec le cryptosystème à clé publique (l'algorithme secret de déchiffrement étant utilisé comme algorithme de signature et l'algorithme public de chiffrement servant à la vérification des signatures correspondantes).

L'idée de base consiste à masquer (par un système de chiffrement à clé publique) le vote émis par l'organe de décision OD à l'organe de vérification OV, mais non à l'organe de comptabilisation OC, et à permettre à l'organe de vérification OV d'éliminer les informations d'identité du message émis par l'organe de décision OD avant transmission à l'organe de comptabilisation OC.

L'organe de décision chiffre l'information source (le vote) S et une donnée aléatoire R1 avec la clé publique PKC de l'organe de comptage, ce qui donne un résultat :

$$X1 = PKC (S, R1) \qquad (1)$$

L'organe de décision chiffre ensuite ce résultat X1 avec sa donnée propre Id, par exemple son identité ou le certificat de sa signature (les principes de la cryptographie à clé publique, les mécanismes d'authentification et les signatures numériques sont, comme on l'a indiqué plus haut, des techniques connues, qui ne seront donc pas réexpliquées en détail).

Ce chiffrement est effectué avec la clé publique PKV de l'organe de vérification, ce qui donne un résultat :

$$X2 = PKV (X1, Id) \qquad (2)$$

Enfin, l'organe de décision OD signe le message X2 au moyen de sa signature SiD, donnant un message final :

$$M1 = SiD (X2) = SiD (PKV (PKC(SnR1), Id)) \qquad (3)$$

Ce message M1 est envoyé à l'organe de vérification OV.

L'organe de vérification commence par déchiffrer M1 pour obtenir le message X1 et Id au moyen de sa clé secrète SKV, et vérifie la signature de X2 au moyen de la signature associée à Id.

En cas de conformité, l'organe de vérification introduit le votant dans sa base de données B1 après avoir vérifié que ce dernier n'a pas déjà voté.

Il associe alors l'identité Id à une donnée aléatoire R2, propre au votant et mémorisée dans la base de données B1 à côté de l'identité Id.

L'organe de vérification forme alors un message constitué de la signature de X1 et de R2 au moyen de sa signature propre SiV, soit :

$$M2 = SiV (X1, R2) = SiV (PKC (S, R1), R2) \qquad (4)$$

Ce message M2 est envoyé à l'organe de comptabilisation OC. Comme on peut le constater, il ne contient aucune indication susceptible de révéler l'identité du votant, puisque la donnée R2 associée à cette identité est une donnée aléatoire, non significative pour celui qui ne dispose pas du fichier B1.

Dans le cas où le votant aurait déjà été enregistré dans la base de données du fichier B1, et que le message A3 (voir plus bas) aurait déjà été renvoyé à l'organe de décision, l'organe de vérification, à ce stade, envoie à nouveau un message A3 sans rien transmettre à l'organe de comptabilisation OV.

A réception du message M2, l'organe de comptabilisation OC vérifie la signature et déchiffre le message X1 pour obtenir la valeur S, ce déchiffrement étant opéré au moyen de la clé secrète SKC propre à l'organe de comptabilisation.

L'information source S (le vote) est alors comptabilisée dans la base de données B2 de l'organe de comptabilisation qui, comme on le voit, n'a aucune connaissance de l'identité des votants ni aucun moyen de retrouver cette identité à partir des informations échangées ou mémorisées.

L'organe de comptabilisation OC accuse alors réception de l'information et confirme la bonne exécution de la comptabilisation par signature des deux données aléatoires R1 et R2 par la signature SiC, donnant un message (premier accusé de réception) :

$$A1 = SiC\ (R1,\ R2) \tag{5}$$

L'organe de vérification OV reçoit le message A1, en vérifie la signature, et accuse réception de ce message en retournant à l'organe de comptabilisation OC un message de confirmation (second accusé de réception) :

$$A2 = SiV(R1). \tag{6}$$

A réception de ce message de confirmation A2, l'organe de comptage OC, après avoir vérifié la signature, efface R1 de la base de données B2.

Comme on le voit, cette base de données peut être constituée d'un fichier de taille relativement réduite dans la mesure où elle ne contient, outre les résultats statistiques, que les messages en cours dont réception n'a pas été encore accusée.

Ensuite, l'organe de vérification OV explore sa base de données B1 pour trouver l'identité Id correspondant à la donnée aléatoire R2, et enregistre R1. Il chiffre alors R1 et une autre donnée aléatoire R3 au moyen de la clé publique PKD de l'organe de décision, pour donner un message de confirmation (troisième accusé de réception) :

$$A3 = PKD\ (R1,\ R3) \tag{7}$$

L'organe de décision OD, à réception du message A3, déchiffre celui-ci au moyen de sa clé secrète propre SKD et compare la valeur aléatoire R1 obtenue après déchiffrement du message A3 à la valeur R1 qu'il avait lui-même générée au moment de la production de l'information source S, et qui avait permis l'élaboration du message M1.

La concordance des deux valeurs ainsi comparées indique avec certitude que la donnée source S a bien été transmise et traitée de façon conforme, et que tel a bien été le cas à toutes les étapes du processus.

Le système que l'on vient de décrire est capable de détecter toute perte éventuelle de message (par suite, par exemple, d'un défaut de transmission) du fait que tous les messages émis font l'objet d'un accusé de réception en retour.

De façon générale, après une durée prédéterminée, si le message d'accusé de réception A1, A2 ou A3 n'est pas reçu par l'organe qui s'attend à le recevoir, cet organe réémet le même message dont il aurait dû être accusé réception.

On va examiner ci-après les différentes possibilités de perte de message (ou d'altération du message) et la manière dont le système peut y remédier :

- perte du message M1 : l'organe de décision réémet M1 ; comme ce message est le premier qui arrive à l'organe de vérification OV, celui-ci le traite de la manière indiquée plus haut
- perte du message A3 : l'organe de décision réémet le message M1 mais, contrairement au cas précédent, l'identité du votant a déjà été chargée dans la base de données B1 ; si le message A3 avait déjà été émis par l'organe de vérification OV, ce dernier le réémet, dans le cas contraire le message est ignoré (tel est le cas lorsque le message A1 n'a pas encore été reçu) .
- perte du message M2 : l'organe de vérification OV réémet M2 ; comme ce message est vu par l'organe de comptage OC comme étant le premier, le processus se poursuit de façon normale.
- perte du message A1 : dans ce cas, l'organe de vérification OV réémet M2 mais, comme le message correspondant a déjà fait l'objet d'un chargement dans la base de données B2 de l'organe de comptabilisation OC, celui-ci ne modifie pas la rubrique correspondante du fichier et se contente de réémettre l'accusé de réception A1
- perte du message A2 : dans ce cas, l'organe de comptabilisation OC réémet le message A1 ; comme l'organe de vérification OV, après recoupement de sa base de données, constate que le message correspondant M2 a déjà été émis, il va alors se contenter de réémettre l'accusé de réception A2 en direction de l'organe de comptabilisation OC.

Outre la possibilité de remédier à toute perte d'information lors de la transmission, le système présente l'avantage majeur d'une sécurité maximale en ce qui concerne le caractère anonyme du vote, la vérification de l'identité du votant et l'empêchement de toute falsification d'identité ou de double vote.

En effet :

- le caractère anonyme du vote est assuré du fait qu'une personne qui serait en mesure de capter les informations circulant sur les différents canaux de transmission ne pourrait associer un vote au votant correspondant, sauf à pouvoir briser les codes, ce qui suppose de connaître les trois clés secrètes SKD, SKV et SKC. On notera d'ailleurs à cet égard que ni l'organe de vérification OV, ni l'organe de comptabilisation OC ne sont capables de mener à bien une telle opération, dans la mesure où ils ne connaissent qu'une partie des codes et ne sont pas en mesure d'en découvrir l'autre partie.
- le votant a la certitude que son vote a bien été pris en compte, car le seul organe capable de déchiffrer la donnée aléatoire R1, qui est associée au vote, est l'organe de comptabilisation OC.
- l'organe de vérification OV permet le filtrage des votes doubles ou des votes non autorisés (du fait d'une identité non conforme).
- le système est à l'abri de toutes pertes de message en cours de transmission, pertes qu'il est possible de détecter aux différents stades de la transaction et auxquelles il est possible de remédier de façon appropriée.

Seconde forme de mise en oeuvre de l'invention :système de relevé de consommations statistique sécurisé à distance.

La figure 2 illustre une seconde forme de mise en oeuvre du procédé de l'invention, réalisé sous une forme un peu simplifiée par rapport à la précédente.

Cette seconde forme est particulièrement appropriée à un système de relevé de consommation à des fins statistiques. Un tel exemple de relevé est celui utilisé par les prestataires de programmes de télévision au moyen d'un système de scrutation mis en place chez l'auditeur et susceptible de se connecter sur le centre serveur informatique du prestataire pour l'informer des programmes écoutés, permettant ainsi de réaliser des statistiques précises.

Dans un tel exemple, on pourrait imaginer que le système soit détourné pour obtenir des informations sur la vie privée du consommateur. En effet, dans les techniques actuellement mises en oeuvre le client est identifié en clair lors de son appel (cette identification étant nécessaire pour que les statistiques ne soient pas faussées par des déclarations pirates). Or l'identification du client permet de connaître ses habitudes, par exemple de connaître ses heures d'absence, ou peut servir à créer un fichier des personnes regardant un programme particulier, etc., en d'autres termes pour pénétrer de façon indue la vie privée de l'auditeur.

Comme dans la première forme de mise en oeuvre, le système utilisé dans cette seconde forme de mise en oeuvre, illustrée figure 2, comporte un organe de décision OD, un organe de vérification OV et un organe de comptabilisation OC fonctionnellement et structurellement distincts les uns des autres.

L'organe de décision OD produit une information source S (le relevé de consommation, en clair), est individualisé par un identifiant Id et possède des clés publique et secrète propres PKD et SKD, respectivement, pour permettre le chiffrement des informations échangées.

Cet organe de décision OD peut être par exemple un système de scrutation relié à un téléviseur pour produire la donnée source S, et recevant une carte à puce propre à l'utilisateur, permettant de mémoriser et gérer l'identifiant et les clés et algorithmes de chiffrement.

Cet organe de décision OD est relié par une liaison télématique à un organe de vérification OV, par exemple le centre informatique du prestataire de programmes de télévision ou d'un organisme chargé d'établir la statistique demandée.

Cet organe de vérification OV contient une base de donnée B1 constituée à partir du fichier des utilisateurs qui feront l'objet du relevé.

L'organe de vérification OV est à son tour relié à un organe de comptabilisation OC, qui peut être avantageusement une carte à puce insérée dans un lecteur de l'organe de vérification OV.

Cet organe de comptabilisation OC possède une base de données B2 formée du fichier des résultats statistiques, fichier qui peut être de taille réduite dans la mesure où seuls les résultats finaux sont conservés. Une fois les relevés de consommation opérés chez tous les usagers, la carte à puce pourra être dissociée de l'organe de vérification OV et lue par un appareil distinct, avec la certitude que les statistiques qui y ont été constituées ont fait l'objet d'une vérification d'identité, mais sans que cette identité puisse être connue.

On va maintenant décrire la manière dont est opérée la transaction.

L'organe de décision OD (système de scrutation installé chez le client) prépare le relevé de consommation S et chiffre cette information avec la clé publique PKC de l'organe de comptabilisation OC, pour donner ainsi une information PKC(S), déchiffrable par l'organe de comptabilisation OC au moyen de sa clé secrète SKC, et donc de lui seul.

Avant de transmettre cette information PKC(S), l'organe de décision OD va tout d'abord s'identifier auprès de l'organe de vérification OV en transmettant à ce dernier son identité Id.

L'organe de vérification OV va alors rechercher dans sa base de données B1 les informations relatives à cette identité et vérifier qu'il s'agit bien d'un client enregistré, que celui-ci n'a pas déjà envoyé son relevé, qu'il fait ou non partie d'une sélection de clients à prendre en compte, etc. Il retrouve en outre la clé publique PKD correspondant à ce client particulier.

L'organe de vérification OV renvoie alors à l'organe de décision OD une valeur aléatoire R qu'il aura généré si les vérifications préliminaires indiquent la conformité des différents paramètres en provenance de l'organe de décision OD.

A réception de cette donnée aléatoire R, l'organe de décision OD produit un message chiffré à partir de cette valeur R et de la donnée PKC(S) (représentative de sa consommation) :

$$M1 = SKD \ (R, PKC(S)). \tag{8}$$

Ce message M1, envoyé à l'organe de vérification OV, est déchiffré par ce dernier au moyen de la clé publique correspondante PKD conservée en mémoire dans la base de données B1. Il met alors à jour cette base de données, par exemple en indiquant pour contrôle ultérieur le jour et l'heure de la communication du relevé (notamment pour éviter qu'un relevé ne soit transmis deux fois), et communique à l'organe de comptabilisation OC l'information PKC(S) obtenue par décodage du message M1, sous forme d'un message :

$$M2 = PKC(S). \tag{9}$$

A réception de M2, l'organe de comptabilisation OC va pouvoir en extraire l'information de consommation S par déchiffrement au moyen de sa clé secrète SKC, et comptabiliser le relevé.

Tout comme dans la forme de mise en oeuvre précédente, on voit que les échanges de données sont tous sécurisés, et qu'il n'est pas possible de connaître en clair à la fois l'identité du client et sa consommation, l'organe traitant l'identité (l'organe de vérification OV) ne pouvant pas déchiffrer le relevé et l'organe de traitement du relevé (l'organe de comptabilisation OC) recevant une information qui, bien que vérifiée, ne porte aucune trace de l'identité de l'émetteur.

## Revendications

1. Un système de comptabilisation anonyme d'informations à des fins statistiques, notamment pour des opérations de vote électronique ou de relevés périodiques de consommation comportant une pluralité d'organes de décision (OD), au moins un organe de vérification (OV) et au moins un organe de comptabilisation (OC), ces organes étant fonctionnellement et structurellement distincts,

    chaque organe de décision (OD) comportant :

    - des moyens pour produire une information source (S) à comptabiliser et une information d'identité (Id) individualisant l'organe de décision, et.
    - des moyens pour chiffrer l'information source de manière à la rendre indéchiffrable par l'organe de vérification et déchiffrable par l'organe de comptabilisation,

    l'organe de vérification (OV) comportant :

    - un fichier (B1) des identités des organes de décision,
    - des moyens pour contrôler, à réception d'un message incident (M1), l'identité de l'organe de décision à l'origine de ce message incident, et
    - des moyens pour élaborer un message dérivé (M2) à partir de ce message incident, ce message dérivé étant un message anonyme dépourvu d'information d'identité déchiffrable par l'organe de comptabilisation,

    l'organe de comptabilisation (OC) comportant :

    - des moyens pour recevoir de l'organe de vérification les messages dérivés et pour traiter ces messages de manière à élaborer une statistique des informations source correspondantes, et

- un fichier (B2) des statistiques ainsi élaborées.

2. Le système de la revendication 1, dans lequel les moyens pour chiffrer l'information source de l'organe de décision sont des moyens de chiffrement à clé publique opérant à partir de la clé publique de l'organe de comptabilisation (PKV).

3. Le système de la revendication 1, dans lequel l'organe de vérification comporte en outre :

   - des moyens pour émettre en retour vers l'organe de décision un message d'accusé de réception (A3) après contrôle conforme de l'identité de cet organe de décision.

4. Le système de la revendication 3, dans lequel l'organe de vérification comporte en outre :

   - des moyens pour chiffrer le message d'accusé de réception, ces moyens étant des moyens de chiffrement à clé publique opérant à partir de la clé publique de l'organe de décision (PKD), cette clé étant mémorisée dans le fichier (B1) des identités des organes de décision.

5. Le système de la revendication 1, dans lequel l'organe de comptabilisation comporte en outre :

   - des moyens pour émettre en retour vers l'organe de vérification un message d'accusé de réception (A1) après réception et traitement du message dérivé (M2) correspondant.

6. Le système de la revendication 1, dans lequel les messages échangés entre les organes de décision, l'organe de vérification et l'organe de comptabilisation comportent, pour au moins certains d'entre eux, une signature numérique (SiD, SiV, SiC) et l'organe recevant un tel message comportant des moyens de vérification de la signature correspondante.

7. Le système de la revendication 1, dans lequel l'organe de décision comporte en outre :

   - des moyens pour chiffrer l'information d'identité, ces moyens étant des moyens de chiffrement à clé publique opérant à partir de la clé publique de l'organe de vérification (PKV).

8. Le système de la revendication 1, dans lequel l'organe de décision est un terminal télématique coopérant avec une carte à microcircuit propre à un utilisateur donné et insérable dans un lecteur de ce terminal.

9. Le système de la revendication 1, dans lequel l'organe de vérification est un dispositif informatique et l'organe de comptabilisation est une carte à microcircuit insérable dans un lecteur de ce dispositif informatique

**Patentansprüche**

1. Anonymes Informationsbuchungssystem für Statistiken, insbesondere für elektronische Wahlvorgänge oder periodische Lesevorgänge für Verbrauchsstücklisten, enthaltend mehrere Entscheidungseinheiten (OD), wenigstens eine Prüfeinheit (OV) und wenigstens eine Buchungseinheit (CU), wobei diese Einheiten funktionell und strukturell getrennt sind und jede Entscheidungseinheit folgendes enthält:

   - Mittel zum Bilden von zu buchenden Ausgangsinformationen (S) und einer Identitätsinformation (Id), die die Entscheidungseinheit individualisiert, und
   - Mittel zum Verschlüsseln der Ausgangsinformation derart, daß sie durch die Prüfeinheit nicht entschlüsselbar und durch die Buchungseinheit entschlüsselbar ist,

     wobei die Prüfeinheit (OV) folgendes enthält:

   - eine Datei (B1) der Identitäten der Entscheidungseinheiten,
   - Mittel zum Prüfen der Identität der Entscheidungseinheit, von der diese ankommenden Nachricht stammt, beim Empfang einer ankommenden Nachricht (M1) und
   - Mittel zum Erstellen einer Nachricht (M2) aus der ankommenden Nachricht, wobei diese abgeleitete Nachricht eine anonyme Nachricht ohne eine Identitätsinformation ist, die durch die Buchungseinheit entschlüsselbar

**EP 0 763 803 B1**

ist, wobei die Buchungseinheit (OC) folgendes enthält:

- Mittel zum Empfangen der abgeleiteten Nachrichten von der Prüfeinheit und zum Verarbeiten dieser Nachrichten in einer solchen Weise, daß eine Statistik der entspechenden Ausgangsinformation erstellt wird, und
- eine Datei (B2) der derart erstellten Statistiken.

2. System nach Anspruch 1, wobei die Mittel zum Verschlüsseln der Ausgangsinformation der Entscheidungseinheit Mittel zum Verschlüsseln mit einem öffentlichen Schlüssel sind, die mit dem öffentlichen Schlüssel der Buchungseinheit (PKV) arbeiten.

3. System nach Anspruch 1, wobei die Prüfeinheit außerdem folgendes enthält:

- Mittel zum Rückübertragen einer Nachricht für die Empfangsbestätigung (A3) nach einer konsistenten Prüfung der Identität dieser Entscheidungseinheit zu der Entscheidungseinheit.

4. System nach Anspruch 3, wobei die Prüfeinheit außerdem folgendes enthält:

- Mittel zum Verschlüsseln der Nachricht für die Empfangsbestätigung, wobei diese Mittel Verschlüsselungsmittel mit öffentlichem Schlüssel sind, die mit dem öffentlichen Schlüssel der Entscheidungseinheit (PKD) arbeiten, wobei dieser Schlüssel in der Datei (B1) der Identitäten der Entscheidungseinheiten gespeichert ist.

5. System nach Anspruch 1, wobei die Buchungseinheit folgendes enthält:

- Mittel zum Rücksenden einer Nachricht für eine Empfangsbestätigung (AI) nach dem Empfang und der Verarbeitung der entsprechenden abgeleiteten Nachricht (M2) zu der Prüfbeinheit.

6. System nach Anspruch 1, wobei die zwischen den Entscheidungseinheiten ausgetauschten Nachrichten, die Prüfeinheit und die Buchungseinheit, wenigstens einige von ihnen eine digitale Unterschrift (SiD, SiV, SiC) enthalten und wobei die eine derartige Nachricht empfangende Einheit Mittel zum Prüfen der entsprechenden Unterschrift enthält.

7. System nach Anspruch 1, wobei die Entscheidungseinheit außerdem folgendes enthält:

- Mittel zum Verschlüsseln der Identitätsinformationen, wobei diese Mittel Verschlüsselungsmittel mit einem öffentlichen Schlüssel sind, der mit dem öffentlichen Schlüssel der Prüfeinheit (PKV) arbeitet.

8. System nach Anspruch 1, wobei die Entscheidungseinheit ein Telematikanschluß ist, der mit einer Karte mit Mikroschaltung zusammenarbeitet, die einem bestimmten Benutzer gehört und in einen Leser dieses Anschlusses einführbar ist.

9. System nach Anspruch 1, wobei die Prüfeinheit eine Informationseinrichtung und die Buchungseinheit eine Karte mit einer Mikroschaltung ist, die in einen Leser dieser Informationseinrichtung einführbar ist.


**Claims**

1. A system for the anonymous counting of information items for statistical purposes, especially in respect of operations in electronic voting or in periodic readings of consumption, including a plurality of decision units (DU), at least one verification unit (VU) and at least one counting unit (CU), these units being functionally and structurally separate,

    each decision unit (DU) including:

    - means for producing a source information item(s) to be counted and an identity information item (Id) singling out the decision unit, and
    - means for enciphering the source information item in such a way as to render it indecipherable by the verification unit and decipherable by the counting unit,

        the verification unit (VU) including:

9

- a file (B1) of the identities of the decision units,
- means for checking, on receiving an incoming message (M1), the identity of the decision unit from which this incoming message originates, and
- means for compiling a derived message (M2) on the basis of this incoming message, this derived message being an anonymous message devoid of any identity information item decipherable by the counting unit,

the counting unit (CU) including:

- means for receiving the derived messages from the verification unit and for processing these messages in such a way as to compile a statistic of the corresponding source information items, and
- a file (B2) of the statistics thus compiled.

2. The system of claim 1, in which the means for enciphering the source information item of the decision unit are public key enciphering means operating on the basis of the public key of the counting unit (PKV).

3. The system of claim 1, in which the verification unit furthermore includes:

- means for sending back to the decision unit an acknowledgement of receipt message (A3) after consistent checking of the identity of this decision unit.

4. The system of claim 3, in which the verification unit furthermore includes:

- means of enciphering the acknowledgement of receipt message, these means being public key enciphering means operating on the basis of the public key of the decision unit (PKD), this key being stored in the file (B1) of the identities of the decision units.

5. The system of claim 1, in which the counting unit furthermore includes:

- means for sending back to the verification unit an acknowledgement of receipt message (AI) after receipt and processing of the corresponding derived message (M2).

6. The system of claim 1, in which the messages exchanged between the decision units, the verification unit and the counting unit include, in respect of at least some of them, a digital signature (SiD, SiV, SiC) and the unit receiving such a message includes means for verifying the corresponding signature.

7. The system of claim 1, in which the decision unit furthermore includes:

- means for enciphering the identity information item, these means being public key enciphering means operating on the basis of the public key of the verification unit (PKV).

8. The system of claim 11, in which the decision unit is a telematic terminal cooperating with a microcircuit card particular to a given user and insertable into a reader of this terminal.

9. The system of claim 1, in which the verification unit is a computing device and the counting unit is a microcircuit card insertable into a reader of this computing device.

EP 0 763 803 B1

FIG.1

FIG.2